# EUROPEAN PATENT APPLICATION

(11) **EP 3 046 231 A1**
(43) Date of publication of application: **20.07.2016**
(21) Application number: 15202143.2
(22) Date of filing: 22.12.2015
(51) Int. Cl.: H02K 3/52, H02K 3/50

(54) **STATOR POLE INSULATOR**

(30) Priority: 13.01.2015 US 201514595469
(71) Applicant: Hamilton Sundstrand Corporation, Charlotte, NC 28217 (US)
(72) Inventor: SHAHAMAT, Mohammad, Rockton, IL 61072 (US); PETERS, Kerry M., Belvidere, IL 61008 (US); SAPRON, Michael, Rockford, IL 61107 (US)
(74) Representative: Iceton, Greg James

(57) **Abstract**

A machine includes a rotor and a stator 200 disposed about an axis. The stator includes a ring disposed about the axis. A plurality of poles 202 each extend radially from the ring and support a coil of a wire 204. Moldings 206 insulate at least a portion of the plurality of poles from the wire. The moldings include a radially outer portion, a radially inner portion, a connector portion integral with the radially outer portion and the radially inner portion, and a tab 224 on one of the radially outer portion and the radially inner portion. The wire is wrapped behind the tab between adjacent poles. A method of insulating and securing wire for coils formed on adjacent poles is also disclosed.

## Description

### BACKGROUND

This application relates to improvements in insulating stator poles from electrically conductive wire coils.

Generators are known and include a rotor driven by a power source, such as a gas turbine engine, to rotate relative to a stator. The relative rotation of the rotor adjacent to the stator generates electrical power. The electrical power is utilized for various purposes, such as to power associated aircraft functions.

Another electric machine is an electric motor. The electric power is supplied to the stator to drive the rotor to rotate various loads.

On an aircraft, a generator is often driven to act as a starter and begin rotation of a gas turbine engine. Such a machine is known as a starter generator.

One starter generator may include three separate generators: a permanent magnet generator (PMG), an exciter, and a main generator. The PMG provides power to the stator coils of the exciter. The exciter then provides power to the rotor windings of the main generator. The main generator is used as the main source for generating power or for driving the shaft when used as a starter.

In the manufacture of electric machines, coils of electrically conductive wire are wrapped around each of several stator poles, one example being the stator poles of an exciter. The stator poles are made of metal, and contact between the wire and any exposed metal could cause a short in the system. Thus, the poles and other components of the stator are typically insulated from the wire.

One known way to insulate each pole from the wire is the installation of pieces of insulating paper on each surface of the pole. Insulating all surfaces of a pole using several pieces of insulating paper is a labor-intensive and time-consuming process.

Another way of insulating each pole is to install a non-conductive molding to each pole.

In one stator configuration, adjacent poles are coiled in opposite directions (clockwise or counter-clockwise) to create alternating north and south magnetic poles. The alternating winding directions between adjacent poles may result in unsecure or uninsulated wire between poles.

### SUMMARY

A machine includes a rotor and a stator disposed about an axis. The stator includes a ring disposed about the axis. A plurality of poles each extend radially from the ring and support a coil of a wire. Moldings insulate at least a portion of the plurality of poles from the wire. The moldings include a radially outer portion, a radially inner portion, a connector portion integral with the radially outer portion and the radially inner portion, and a tab on one of the radially outer portion and the radially inner portion. The wire is wrapped behind the tab between adjacent poles.

A method of insulating a machine according to a disclosed exemplary embodiment includes the initial step of placing a molding over a first pole of a stator disposed about an axis and placing a second molding over a second pole of the stator with at least one of the first molding and the second molding including a tab. Once the moldings are in place over the first and second poles a wire is wrapped around the first molding, hooked around the tab and wound around the adjacent molding on the second pole.

These and other features may be best understood by way of example only from the following drawings and specification.

### BRIEF DESCRIPTION OF THE DRAWINGS

Figure 1 schematically shows an aircraft gas turbine engine and electric machine assembly.
Figure 2A schematically shows an end view of a prior art stator.
Figure 2B shows an end view of a pole of the prior art stator.
Figure 3A shows an isometric view of an example stator.
Figure 3B shows an isometric view of the example stator with windings.
Figure 4A shows a top isometric view of an example molding.
Figure 4B shows a bottom isometric view of the example molding.
Figure 5 shows an example pole of a stator.
Figure 6A shows a front view of adjacent poles of a stator with moldings.
Figure 6B shows a back view of the adjacent poles of a stator with moldings in Figure 6A.
Figures 7A schematically shows a first step of a method for insulating the stator.
Figures 7B schematically shows a second step of a method for insulating the stator.
Figures 7C schematically shows a third step of a method for insulating the stator.
Figures 7D schematically shows a fourth step of a method for insulating the stator.

### DETAILED DESCRIPTION

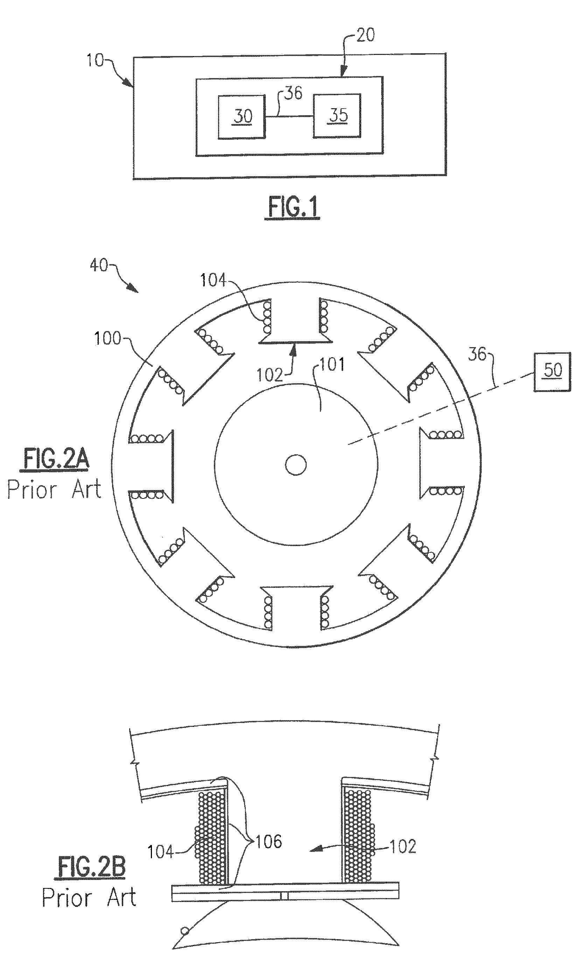

Referring to Figure 1, an aircraft 10 has a propulsion system 20 including a gas turbine engine 30 coupled to a generator 35 through shaft 36. The gas turbine engine 30 may drive the generator 35, or the generator 35 may also be used as a starter for the gas turbine engine 30, as known. Although the disclosed example is described and illustrated in the context of an electric generator, it will be appreciated that this disclosure may be used in conjunction with other electric machines, such as electric motors.

As known, and as shown schematically in Figures 1 and 2A, engine 30, when driven to operate and power an aircraft, may have a shaft 36 that drives rotor 101 adjacent to stator 100 to generate electric power. Alternatively, electric power can be supplied to the stator 100 to drive the rotor 101 of the drive shaft 36 and start rotation of components in the gas turbine engine when it is being started.

Referring to Figures 2A and 2B, a prior art stator 100 and rotor 101 of a generator 35 are shown schematically. In one example, the stator 100 and rotor 101 may be a stator and rotor of an exciter of the generator 35. Of course, other electric machine stators may benefit from this disclosure. The stator 100 includes a plurality of poles 102 to receive wire coils 104 for forming an electromagnet. The poles 102 are insulated from the wire coils 104 by a plurality of paper pieces 106 placed on each pole 102. Contact between the metal stator 100 and the wire coil 104 could result in a short, so each pole 102 is insulated from the wire coil 104. A separate paper piece 106 is thus cut and bonded to each surface of the pole 102, as well as to adjacent surfaces. This can be a time-consuming and labor-intensive process.

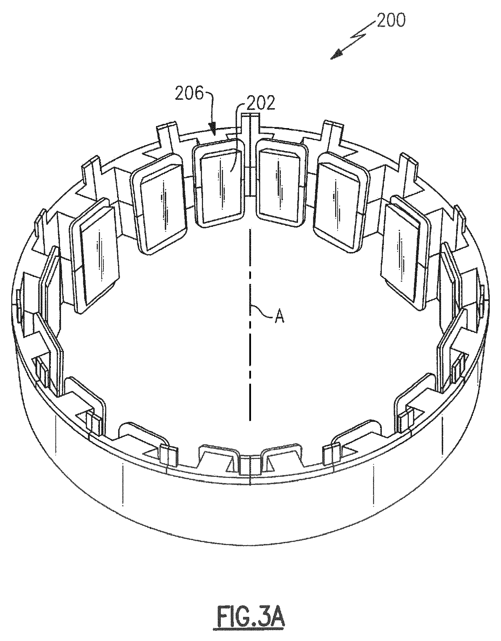

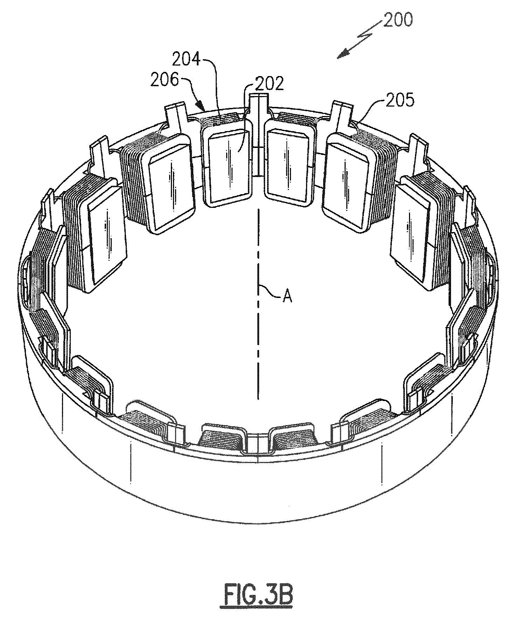

Figures 3A and 3B show an example stator 200 of a generator 35 disposed about an axis A. The stator 200 includes a plurality of radially extending poles 202 spaced circumferentially from each other and configured to receive wire coils 204 formed by the wire. Insulator moldings 206 are placed at each axial end of each pole 202, to insulate each pole 202 from its associated wire coil 204.

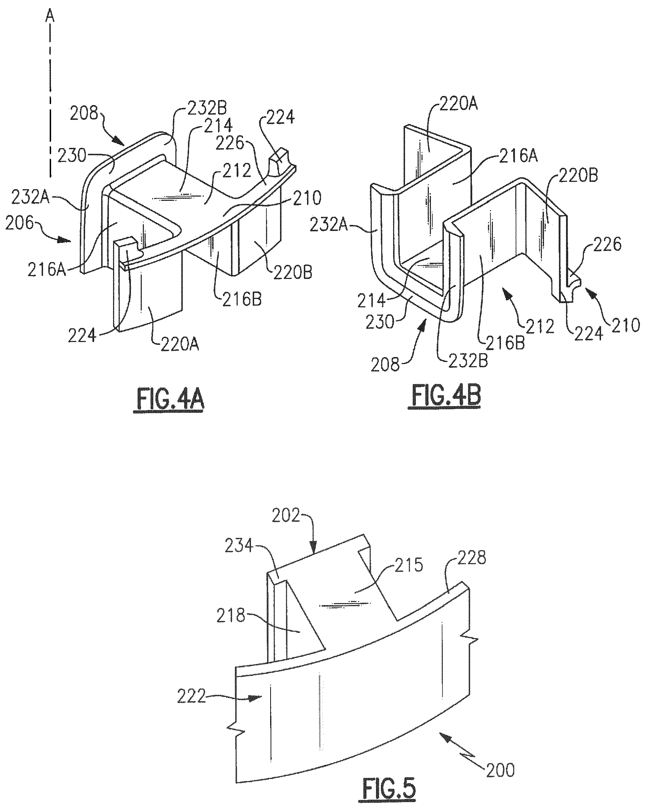

Referring to Figures 4A and 4B with continued reference to Figures 3A and 3B, the example insulator molding 206 includes a radially inner portion 208, a radially outer portion 210, and a connector portion 212 connecting and integral with the radially inner portion 208 and the radially outer portion 210. The radially inner portion 208, the radially outer portion 210, and the connector portion 212 thus form a single molded piece to be placed over an axial end of a pole 202. Another molding 206 may be placed over an opposite end. The example molding 206 may be an injection molded piece formed of polyether ether ketone resin. It is within the contemplation of this disclosure to utilize other plastics and resins that are non-conductive and compatible with the operating environment.

Referring to Figure 5, with continued reference to Figures 4A and 4B, a section of the stator 200 is shown to illustrate the associated surfaces of the stator 200 insulated by the molding 206.

Returning to Figures 4A and 4B, the connector portion 212 of the molding 206 includes an axial endwall 214 extending circumferentially and radially with respect to axis A and configured to insulate an axial end surface 215 of the pole 202. The connector portion 212 further includes a first sidewall 216A and a second sidewall 216B, each extending axially from the endwall 214 with respect to axis A and disposed radially between the radially inner portion 208 and the radially outer portion 210. The sidewalls 216A and 216B are configured to insulate the surfaces 218 on the pole 202 extending axially from the end surface 215.

The radially inner portion 208 is radially inward of the connector portion 212 with respect to axis A. The radially inner portion 208 includes an upper radially inner wall 230 extending axially from a radially inner end of the axial endwall 214. The radially inner portion 208 further includes two side radially inner walls 232A and 232B extending circumferentially from sidewalls 216A and 216B, respectively. The radially inner portion 208 insulates the pole extension 234 at the radially inner end of the pole 202.

The radially outer portion 210 includes radially outer endwalls 220A and 220B configured to insulate the outer ring 222 of the stator 200 from wire coils 204. The radially outer portion 210 includes one or more tabs 224. The example molding 206 includes a tab 224 extending axially outward at each circumferential end, with respect to axis A, to align with a tab on the circumferential end of an adjacent identical molding. Although the example tabs 224 are provided on the radially outer portion 210, the tabs 224 may be provided on the radially inner portion 208.

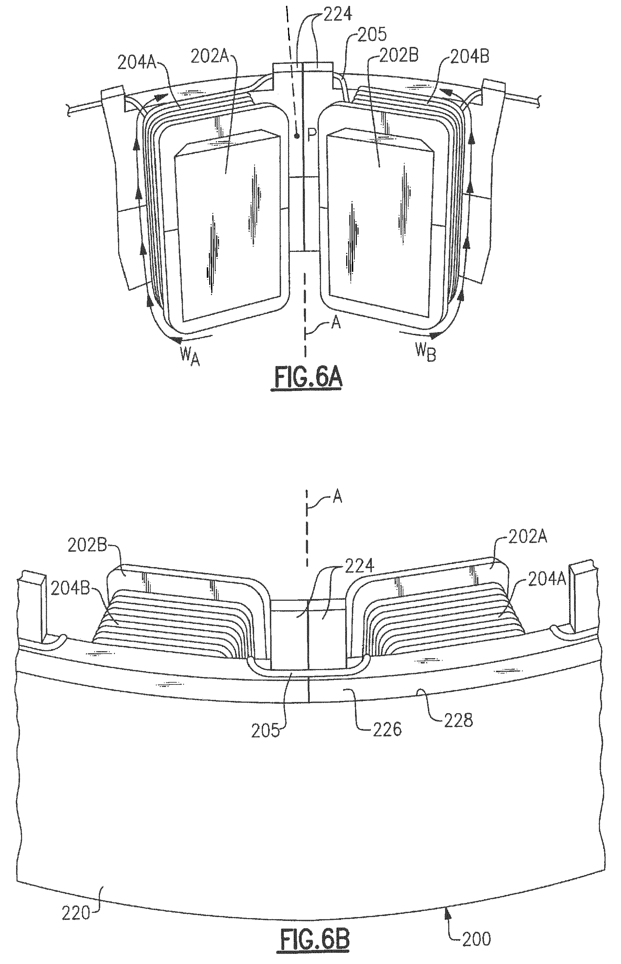

Referring to Figure 6A, a wire coil 204 is formed around each of the poles 202. A coil 204A is formed by wrapping wire clockwise (W_{A}) around pole 202A, and the adjacent coil 204B is formed by wrapping wire counter-clockwise (W_{B}) around the adjacent pole 202B. The alternating winding direction between adjacent poles 202 continues throughout all poles 202 of stator 200 to create alternating north and south poles responsive to the application of current through the wire. As shown, the wire extends in both directions: to and from adjacent pole pairs. The tab 224 secures and insulates a portion 205 of the wire from the stator 200 in the space between poles and alternate winding directions. The tab 224 secures the wire portion 205 by hooking the wire portion 205 between adjacent wire coils 204A, 204B of adjacent poles 202A, 202B. The wire is under tension due to wire portion 205 being wrapped radially outside and behind the tab 224 with respect to axis A before being wrapped around the next adjacent pole 202B.

The example tab 224 is an integral part of the molding 206 and comprised of the same material as the rest of the molding 206. It is within the contemplation of this disclosure that the tab 224 may be a separate part installed onto the molding 206 and may be of a different non-conductive material.

Referring to Figure 6B, with continued reference to Figures 5 and 6A, the tab 224 may be attached to an outer flange 226 of the outer portion 210. With respect to axis A, the flange 226 extends radially outward and circumferentially to abut and insulate the axially outer surface 228 of the stator ring 222, with respect to axis A. The surface of the flange 226 extends radially outward of the tab 224 with respect to axis A to insulate the axial outer surface 228 of the stator ring 222 at the hooking point. That is, because the wire portion 205 is hooked radially outward of the tab 224, the flange 226 extends radially outward of the tab 224 to provide insulation to the axial outer surface 228 from the wire near the hooking point. The tab 224 thus insulates the stator 200 from the wire portion 205, while keeping the wire tight and secured between alternating coil directions. The tab 224 extends axially from the flange 226 a distance longer than the diameter of the wire to provide a secure hook.

The tab 224 is, with respect to axis A, radially aligned with a point P (Figure 6A) circumferentially between adjacent stator poles 202, such that the wire portion 205 can be hooked between adjacent poles. While only two adjacent coils 204A and 204B are shown, the coils 204 of the stator 200 may be formed of a single, continuous wire, such that the wire portion 205 is hooked around a tab 224 between each adjacent pole 202 of the stator 200. When the molding includes a tab 224 at each circumferential end, tabs 224 of adjacent moldings 206 combine to form a single hook between adjacent poles 202.

The moldings 206 on one axial end of the stator 200 may have tabs 224 or the moldings on both axial ends of the stator 200 may have tabs 224. As one alternative, the tab 224 may be located on the radially inner surface of the radially outer endwall 220a, 220b. The tab 224 may alternatively be hook-shaped.

Referring to Figure 6A, in the example, each pole 202 is insulated by two moldings 206. One example molding 206 is placed on one axial side of the pole 202 and a substantially identical molding 206 is placed on the opposite axial end of the pole 202. Thus, the moldings 206 on each axial side of the pole combine together to insulate all surfaces of the pole 202 and adjacent areas of the stator 200 that are potentially exposed to the wire. Alternatively, it is contemplated that a single molding could insulate one pole.

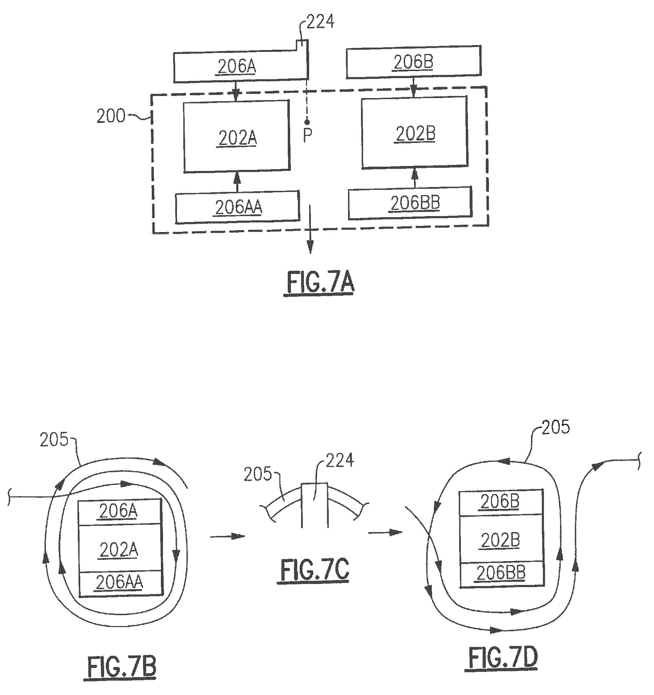

Referring to Figures 7A-7D, a stator 200 of the disclosed embodiment is fabricated according to a method having a first step of placing a molding 206A over a first pole 202A of a stator 200 disposed about an axis. The molding 206A may be applied to one axial side of the pole 202A. A molding 206AA may be applied to an opposite axial side of the pole 202A. A molding 206B is placed over a second pole 202B of the stator 200. The molding 206B may be applied to one axial side of the pole 202B. A lower molding 206BB may be applied to the opposite axial side of the pole 202B. Alternatively, it is contemplated that pole 202A may be insulated by a single molding, and pole 202B may be insulated by a single molding.

While the example embodiment shows multiple tabs 224 on each molding, one or both of the molding 206A and the molding 206B may include a tab 224. The tab 224 may be radially aligned with a point P circumferentially between poles 202A and 202B, with respect to the axis about which stator 200 rotates.

As shown in Figure 7B, a wire is wrapped around the moldings 206A and 206AA to form a coil around the pole 202A. The wire may have been previously wrapped around an adjacent pole pair.

As shown in Figure 7C, the wire portion 205 is then hooked in tension around the tab 224.

As shown in Figure 7D, the wire is then wrapped around the moldings 206B and 206BB to form a coil around the pole 202B. The wire then passes to the next adjacent pole pair.

In one embodiment, the wire is wrapped around pole 202A in one of a clockwise direction or counter-clockwise direction, hooked around the tab 224, and then wrapped around the pole 202B in the opposite wrapping direction from the coil around 202A. As shown in Figures 7B-7D, the wire is wrapped around the pole 202A in the clockwise direction, hooked around the tab 224, and then wrapped around the pole 202B in the counter-clockwise direction. The pole 202A may be directly adjacent to the pole 202B. Alternating directions of adjacent wire coils creates alternating north and south poles at adjacent poles 202. The alternating arrangement is continuous across the entire stator 200 between adjacent poles 202.

Although an embodiment of this disclosure has been disclosed, a worker of ordinary skill in this art would recognize that certain modifications would come within the scope of this invention. For that reason, the following claims should be studied to determine the true scope and content of this disclosure.

## Claims

1. A machine comprising:
a rotor disposed along an axis; and
a stator (200) disposed about said axis; wherein said stator (200) comprises
a ring;
a plurality of poles (202) each extending radially from said ring and supporting a coil of a wire (204); and
moldings (206) configured to insulate at least a portion of said plurality of poles from said wire, said moldings including a radially outer portion, a radially inner portion, a connector portion integral with said radially outer portion and said radially inner portion, and a tab (224) on one of said radially outer portion and said radially inner portion, said wire being wrapped behind said tab between adjacent ones of said plurality of poles.

2. The machine as recited in claim 1, wherein said tab (224) is radially aligned with a point circumferentially between said adjacent ones of said plurality of poles.

3. The machine as recited in claims 1 or 2, wherein said moldings (206) each include a first molding and a second molding placed at opposite axial ends of said plurality of poles.

4. The machine as recited in any preceding claim, wherein said coil (204) at one of said adjacent ones of said plurality of poles is wrapped in a clockwise direction, and said coil at the other of said adjacent ones of said plurality of poles is wrapped in a counter-clockwise direction.

5. The machine as recited in any preceding claim, wherein an axial length of said tab (224) is greater than a diameter of said wire.

6. The machine as recited in claim 5, wherein a flange (226) extends radially from said tab and said flange insulating said ring from said wire.

7. The machine as recited in claim 6, wherein said tab (224) extends axially outward from said flange (226).

8. The machine as recited in claim 7, wherein said flange (226) insulates an axial outer surface of said ring from said wire.

9. A method for insulating a machine comprising:
placing a first molding over a first pole of a stator (206) disposed about an axis;
placing a second molding over a second pole of said stator (200), wherein at least one of said first molding and said second molding includes a tab (224);
wrapping a wire around said first molding;
hooking said wire around said tab (224); and
wrapping said wire around said second molding.

10. The method as recited in claim 9, wherein said tab (224) is radially aligned with a point circumferentially between said first pole and said second pole.

11. The method as recited in claims 9 or 10, wherein said wrapping said wire around said first molding includes wrapping said wire in a clockwise direction, and said wrapping said wire around said second molding includes wrapping said wire in a counter-clockwise direction.

12. The method as recited in claims 9-11, wherein said molding includes a flange (226) extending radially outward from said tab.

13. The method as recited in claims 9-12, wherein an axial length of said tab (224) is greater than a diameter of said wire.

14. The method as recited in claims 9-13, wherein said first molding includes a first top molding and a first bottom molding over an axially opposite end of said first pole from said first top molding.

15. The method as recited in claim 9, wherein said at least one of said first molding and said second molding includes a flange (226), said tab (224) extending axially outward from said flange (226).
